# EUROPEAN PATENT APPLICATION

(11) **EP 2 026 216 A1**
(43) Date of publication of application: **18.02.2009**
(21) Application number: 07114297.0
(22) Date of filing: 14.08.2007
(51) Int. Cl.: G06F 17/30

(54) **Data processing method, computer program product and data processing system**

(71) Applicant: Invu Services Ltd., Bliswoth Northhamptonshire NN7 3DB (GB)
(72) Inventor: Morgan David, Leire Leicestershire LE17 5ER (GB); Rippington John, Oxford OX3 0HS (GB); Staines Justin Noel, Harrowden Bedford MK 42 0TB (GB); Jones Ben, Milton Keynes MK6 4JW (GB); Janes Martyn, Desborough Northants NN14 2TP (GB)
(74) Representative: Richardt, Markus Albert

(57) **Abstract**

The invention relates to a data processing method comprising:
- submitting a query to a search engine,
- receiving a set of document identifiers in response to the query from the search engine,
- clustering the documents contained in the set of documents being identified by the set of document identifiers to provide a plurality of clusters,
- visualizing the clusters on a user interface by displaying a separate icon for each one of the plurality of clusters, each icon being representative of one of the clusters and each icon being selectable by a user in order to access the content of a user selected one of the clusters.

## Description

### Field of the invention

The invention pertains to the field of data processing, and more particularly without limitation to document retrieval by means of search engines.

### Background and related art

Document retrieval can be performed using unstructured or structured information retrieval techniques. For example, documents can be retrieved by searching for documents fulfilling a specified search query. This can encompass documents which are stored locally or which are accessible via a network, such as the Internet.

A search index is commonly used for efficiently searching large amounts of data. Examples for search engines that can rely on a search index include Microsoft Windows Desktop Search, Microsoft Live, Wikipedia Search and Google.

Known search engines return a hit list containing the uniform resource locators (URLs) to relevant documents in response to submitting a search query. Usually the documents are sorted in the order of their relevance. In addition to the URLs the hit list may contain meta-data of the documents and/or representative document excerpts.

### Summary of the invention

The invention provides a data processing method comprising: submitting a query to a search engine, receiving a set of document identifiers in response to the query from the search engine, clustering the documents contained in the set of documents being identified by the set of document identifiers to provide a plurality of clusters, visualizing the clusters on a user interface by displaying a separate icon for each one of the plurality of clusters, each icon being representative of one of the clusters and each icon being selectable by a user in order to access the content of a user selected one of the clusters.

Embodiments of the invention are particularly advantageous as the clustering of the documents and the visualization of the clusters by means of icons provides an intuitive and convenient way of a user's selection of documents from the set of documents returned by the search. If the search returned a large number of documents, especially a large number of documents that have a high relevance, access to documents that are of interest to a user can be facilitated.

Embodiments of the invention are particularly advantageous as a user can directly access clustered sub-sets of the documents without having to go through multiple output screens in order to read a long hit list of documents.

In accordance with an embodiment of the invention the clusters are visualized by icons that are displayed in a circular or carousel-like arrangement on the user interface. Each one of the icons is selectable by the user, such as by means of a mouse click or by means of a position pointing device. The position pointing device may be based on resistive, capacitive or electromagnetic position detection. Such position pointing devices are as such known from the prior art and commercially available such as from Wacom Limited, Japan (www.wacom.com).

Alternatively or in addition touch sensing is used for a user's selection of one or more of the icons.

In accordance with an embodiment of the invention the clustering of the documents is performed using meta-data of the documents and/or the representative excerpts of the documents rather than the documents themselves. This substantially reduces the complexity of the clustering operation and thus minimizes latency times experienced by the user. This is particularly advantageous for implementation of the present invention on a personal computer.

The meta-data that is used for the clustering can comprise the author of the document, the date of creation of the document, the date when the document was last saved, the recipients of the document and/or keywords that have been assigned to the document. This meta-data can be delivered from the search engine together with the set of document identifiers in response to the query. Alternatively at least some of the meta-data needs to be extracted from the documents in a pre-processing step before the clustering operation starts.

The same applies analogously to the representative excerpts of the documents: the representative excerpts can be delivered by the search engine in response to the query or the excerpts need to be provided in a separate pre-processing step, such as by accessing the documents using the document identifiers returned by the query in order to load e.g. only the top portions of the documents such as the first 150 words of each document.

In accordance with an embodiment of the invention the set of document identifiers, the meta-data and/or the representative excerpts of the documents are stored in a database that serves as a buffer between the search engine and the clustering engine.

In accordance with an embodiment of the invention the document excerpts are filtered before the clustering operation is performed. The filtering may encompass text segmentation for identification of word boundaries which is especially useful for some languages such as Chinese, Japanese and Tai which do not have single word boundaries. Alternatively or in addition the filtering may encompass word sense disambiguation. If a word in the filtered document has more than one meaning, one of the meanings is selected which makes the most sense in the context. Further, the filtering may encompass correction of typing and/or optical character recognition (OCR) errors.

In accordance with an embodiment of the invention the filtering of the document excerpts is performed by natural language processing, such as statistical natural language processing.

In accordance with an embodiment of the invention the results of the filtering and/or the clustering are stored in the database. For example, each document is tagged by means of one or more tags that indicate the assignment of the document to one or more clusters or sub-clusters.

In accordance with an embodiment of the invention the clusters are visualized by displaying the icons in a circular or carousel-like arrangement. The circular or carousel-like arrangement of the icons can be rotatable by performing a user input action, such as by clicking on a corresponding virtual key of the user interface.

In accordance with an embodiment of the invention the clusters are visualized by displaying the icons on a virtual sphere. The virtual sphere can be semi-opaque such that only icons being located on the front half of the sphere are fully visible whereas icons being located on the other side of the sphere appear blurred. The sphere is rotatable by the user such that all icons are accessible.

In accordance with an embodiment of the invention the user can select two of the icons in order to initiate a search for documents that are common to the clusters or sub-clusters being represented by the selected icons. The selection of the two or more icons can be performed by consecutive user input actions such as by consecutive mouse clicks or by simultaneously selecting the icons. The simultaneous selection of two or more icons can be performed by a multiple finger input operation which provides an extremely convenient and intuitive document search and access method.

In another aspect the present invention relates to a computer program product for performing a corresponding data processing method.

In still another aspect the present invention relates to a data processing system for performing a method of the invention. The data processing system can be implemented as a client computer, such as a personal computer.

### Brief description of the drawings

In the following embodiments of the invention are described by way of example only making reference to the drawings in which:
- Fig. 1: is a block diagram of an embodiment of a data processing system of the invention,
- Fig. 2: is a flow diagram of an embodiment of a data processing method of the invention,

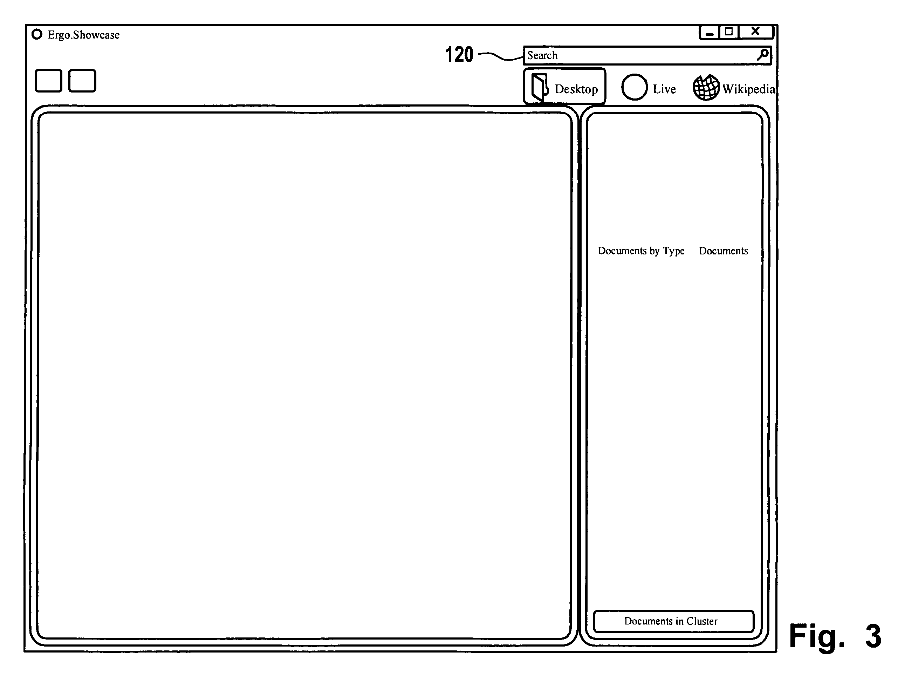

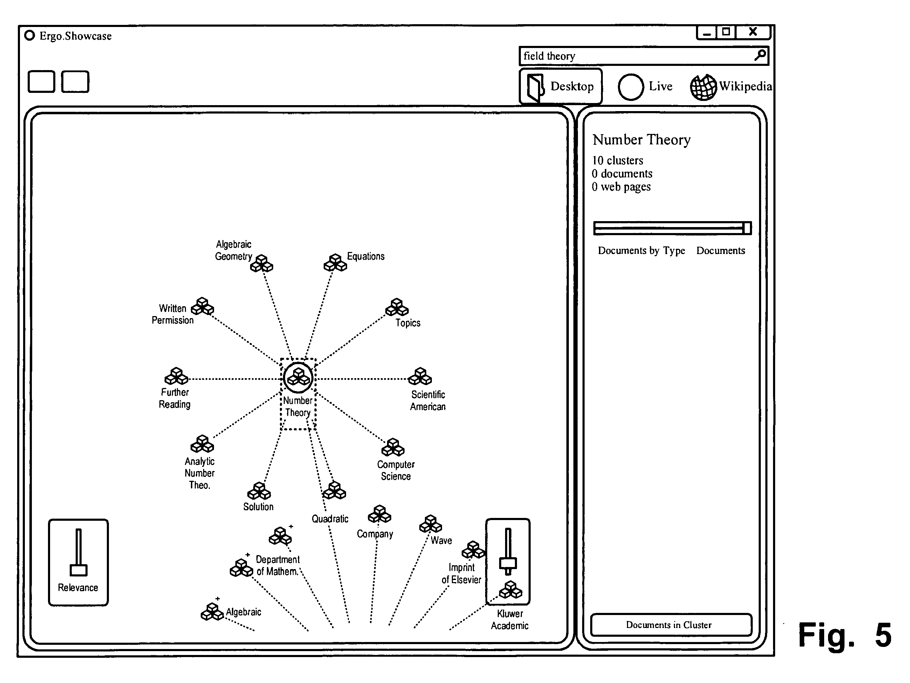

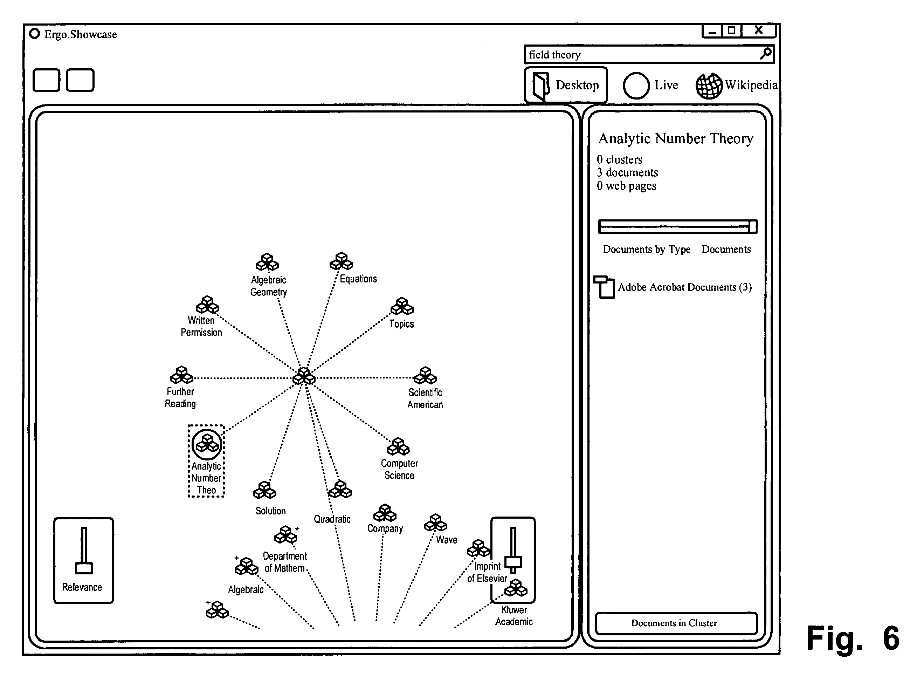

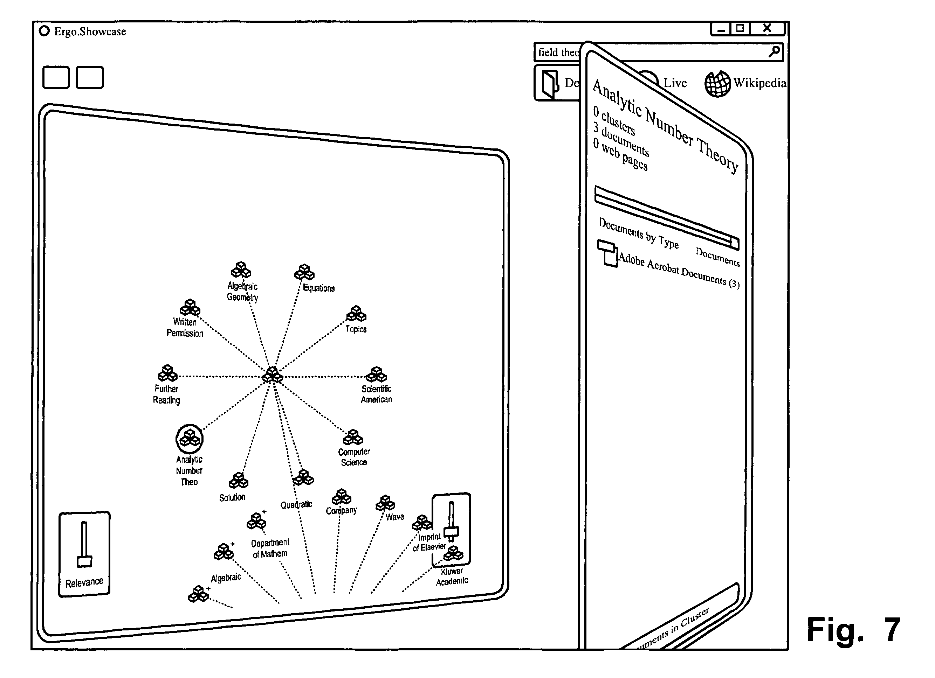

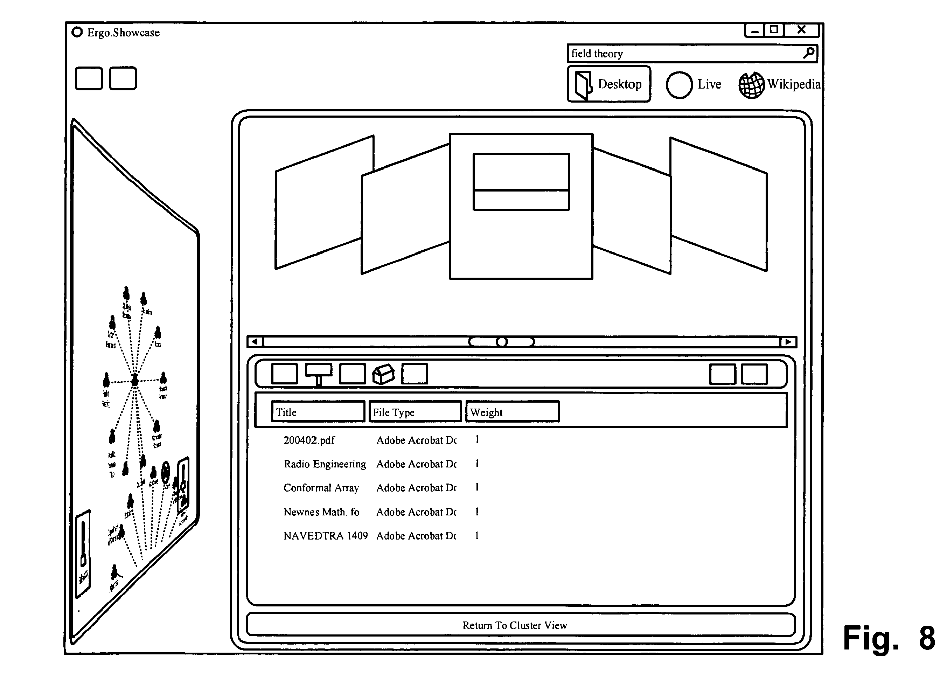

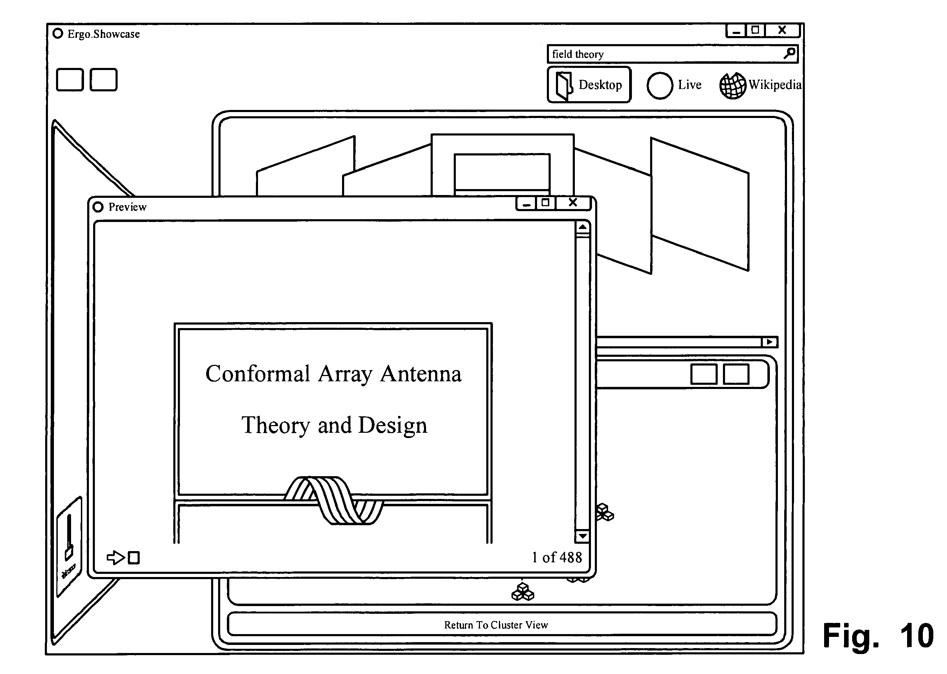

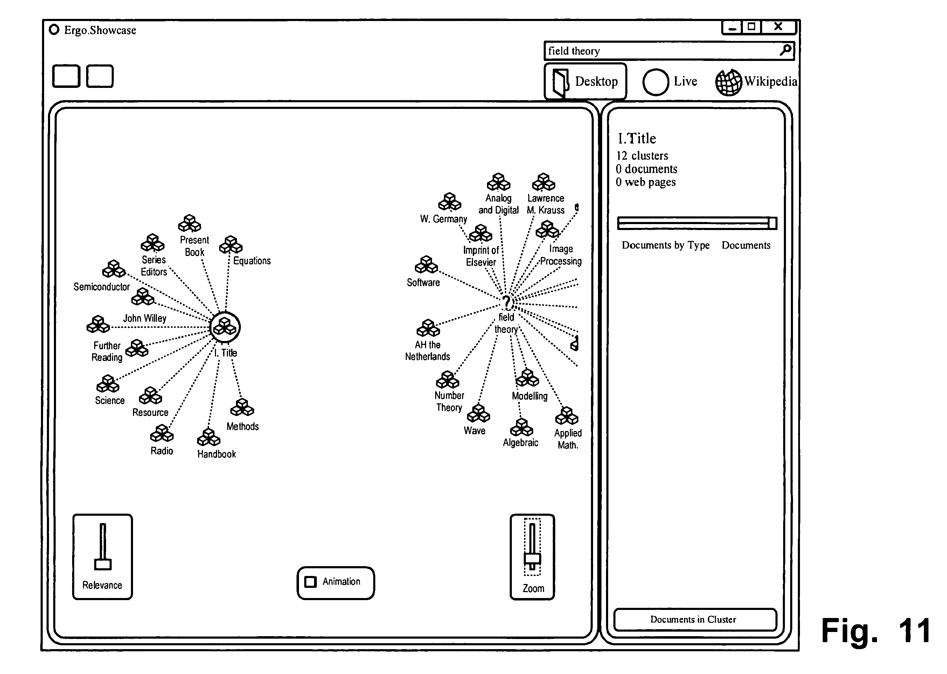

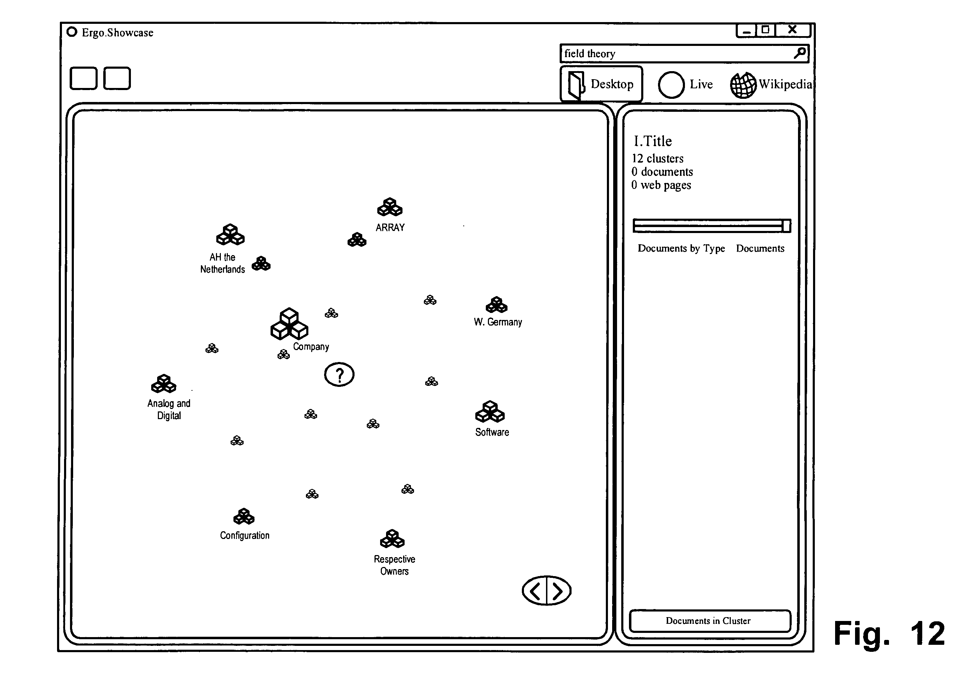

- Figs. 3-13: are screen shots being illustrative of various implementations of the visualization of the icons representing the clusters.

### Detailed description

In the following detailed description the same reference numerals are used to designate like elements.

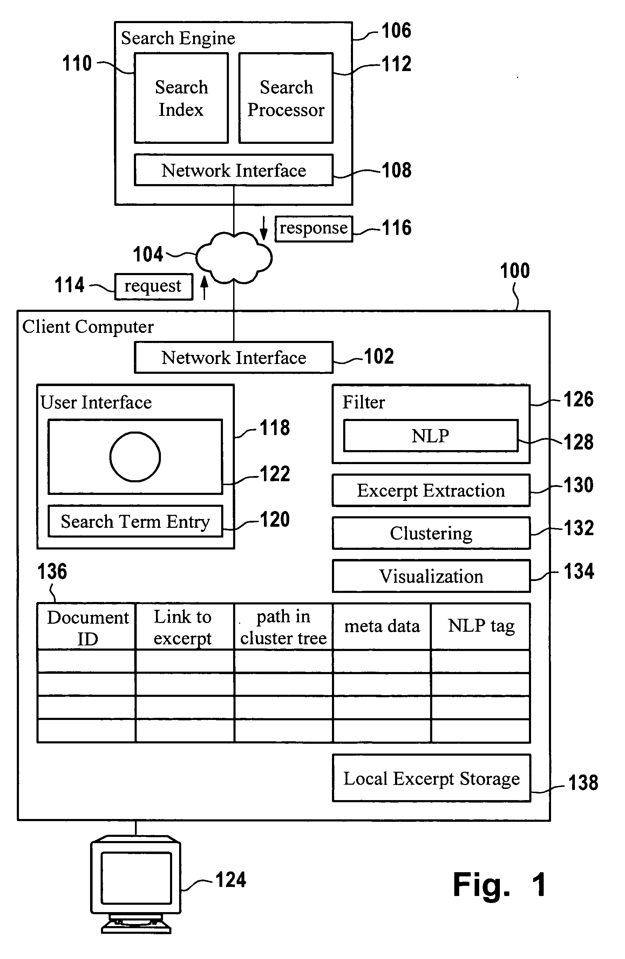

Fig. 1 shows a data processing system in accordance with an embodiment of the invention. The data processing system is implemented as a client computer 100. The client computer 100 has a network interface 102 for coupling the client computer 100 to a computer network 104, such as the Internet. A search engine 106 is also coupled to the computer network 104. The search engine 106 has a network interface 108 for coupling to the computer network 104, a search index 110 and a search processor 112 for the execution of queries.

For example, communication between the client computer 100 and the search engine 106 is performed in accordance with a request-response protocol, such as the hypertext transfer protocol (HTTP). The client computer 100 can send a request 114 that specifies the query. In response to the request 114 the search processor 112 executes the query using the search index 110. The search processor 112 generates a response 116 that contains the set of document identifiers of the documents that have been identified by the execution of the query. For example, the URLs of the documents can be contained in the response 116.

The response 116 can contain additional information, such as the relevance of each document of the set of documents identified in the response 116, meta-data of each of the identified documents and/or a document excerpt for each document containing a representative text portion. For example the response 116 contains the first 150 words for each identified document as such a document excerpt.

In another embodiment the search engine 106 may form an integral part of the client computer 100, such as for performing a desktop search.

The client computer 100 has a user interface 118 for providing a data entry field 120 for entry of one or more search terms that constitute the query. The user interface 118 can generate an output window 122 for outputting a visualization of the search result obtained with the response 116 from the search engine 106. The client computer 100 is coupled to a display device 124 for displaying at least the output window 122. The display device can have an integrated position detection sensor or touch panel for a user's selection of one or more of the icons that are shown in the output window 122.

The client computer 100 can have a filter 126 for filtering the content of the response 116, such as the document excerpts and/or the meta-data. The filtering can be performed for automatic correction of typographical and/or OCR errors, for text segmentation and/or word sense disambiguation. The filter 126 may comprise a natural language processing module 128 for performing such filtering operations.

The client computer 100 may comprise an excerpt extraction module 130. The excerpt extraction module 130 is useful if the response 116 does not comprise document excerpts or document excerpts that are not useful for the purposes of the consecutive clustering operation. The excerpt extraction module 130 can access each one of the documents identified in the response 116 or a certain predefined maximum number of such documents in order to at least partially load these documents into the client computer 100 for extraction of excerpts from each of the documents.

The client computer 100 has a clustering module 132 for clustering the set of documents identified in the response 116 using the documents themselves or alternatively the document excerpts and/or meta-data. Usage of the complete documents for the clustering has the disadvantage of requiring a considerable amount of computing power which can normally not be provided by standard personal computers. In contrast, usage of just the document excerpts and/or the document meta-data for performing the clustering can be performed with minimal latency times using the computational resources of a standard personal computer.

The clustering module 132 can implement any suitable clustering algorithm, such as an hierarchical or partitional clustering algorithm, in particular the k-means clustering algorithm or a similar clustering algorithm.

The visualization module 134 can visualize the clusters identified by the clustering module by assigning an icon to each one of the clusters and sub-clusters, if any. The icons are arranged in an intuitive and easy to navigate manner by the visualization module 134 on the output window 122 such as in a circular arrangement or on a virtual sphere.

The client computer 100 has a database 136 that serves as a buffer between the search engine 106 and the clustering module 132. Further, the database 136 is used for storing the results of the clustering provided by the clustering module 132.

A separate entry is created in the database 136 for each document identified in the response 116. Each entry comprises a document identifier (ID), a link to the respective document excerpt, an identifier of the cluster or the clusters to which the document belongs, such as one or more path descriptors in the cluster tree if hierarchical clustering is used, meta-data of the document and an NLP tag that may have been generated by the filter 126, such as for disambiguation of certain terms that are contained in the document.

Further, the client computer 100 has local storage 138 for storage of the document excerpts. The links to the excerpts contained in the database 136 point to respective storage locations within the local storage 138.

In operation a user enters one or more search terms into the data entry field 120 for specifying a query. In response the request 114 is generated and sent from the client computer 100 to the search engine 106 which returns the response 116.

In one implementation the clustering operation is performed directly on the basis of the complete documents identified in the response 116. In this implementation all documents or a certain maximum number of documents having the highest relevance are loaded in the client computer 100 and then clustered by means of the clustering module 132. Meta-data assigned to the documents can also be taken into account. Further, the documents can be filtered by means of filter 126 before the clustering operation is performed.

In an alternative implementation the clustering is performed on the document excerpts and/or the meta-data instead of the complete documents. When the response 116 is received the document IDs contained in the response 116 are stored in the database 136 as well as the meta-data that may be contained in the response 116. If the response 116 does not carry suitable document excerpts extraction module 130 is initiated. The resultant excerpts are stored in the local storage 138 and respective links are entered into the database 136. The excerpts are filtered by means of filter 126 and any resultant NLP tags are also stored in the database 136.

Next, a clustering operation is performed by the clustering module 136 on the basis of the document excerpts and/or the meta-data. If a hierarchical clustering algorithm is used by the clustering module 132 a cluster tree results. Each document is contained in one or more of the clusters. Respective path indications are stored in the database 136.

After the clustering operation has been completed, the visualization module 134 generates a visual output for display on the display device 124 as output window 122.

The client computer 100 may have one or more computer peripherals for receiving user inputs regarding the selection of one or more of the icons in order to access one or more of the documents identified in the search, such as a position detection device. The user can point to one or more of the icons by means of a pointer; the position pointed to by the pointer is detected by the position detection device such that the user's selection of one or more icons is received.

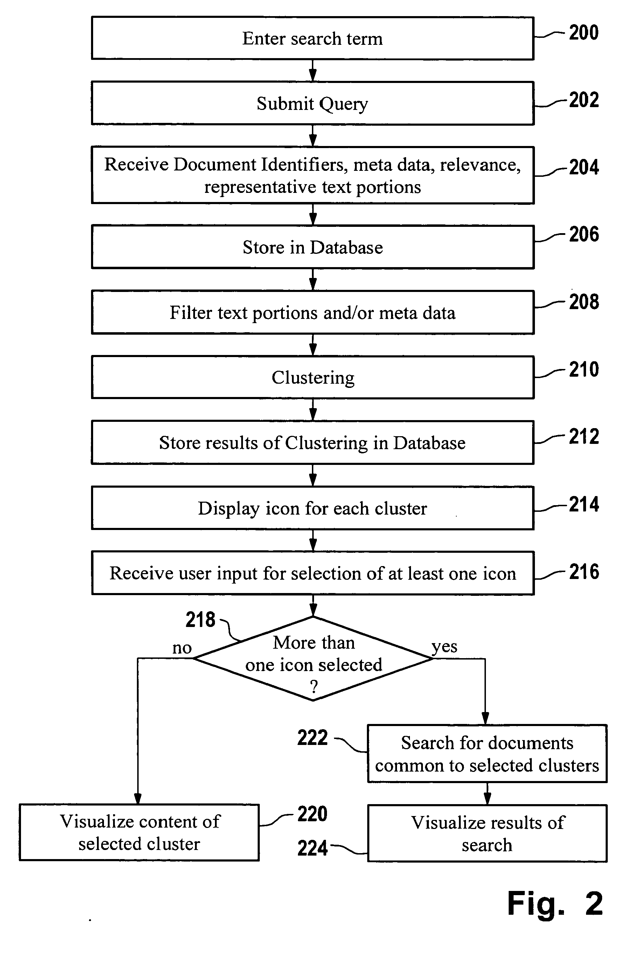

Fig. 2 shows a respective flowchart. In step 200 a user enters one or more search terms for formulation of a search query. In step 202 the query is submitted to a search engine. The search engine returns a set of document identifiers in step 204. Optionally the response received from the search engine may comprise document meta-data, the relevance of each document given as a numerical score and/or representative text portions of each document to be used as document excerpts.

In step 206 the search results returned by the search engine are stored in the local database 136. In step 208 the text portions and/or the meta-data are filtered such as for correction of typographical or OCR errors.

In step 210 the clustering operation is performed and the results of the clustering operation are stored in the local database in step 212.

In step 214 an icon is displayed on the user interface for each one of the clusters. The icons can be arranged in a circular or carousel-like form or they can be placed on a virtual sphere. A navigation functionality can be provided such that the user can navigate along the arrangement of the icons, such as by rotating the circular or carousel-like arrangement of the icons or the virtual sphere.

In step 216 a user selects one or more of the icons and the respective user input is received. The user input can be entered by means of a mouse click, using a position pointing device and/or a touch screen, in particular a multipoint touch screen.

In step 218 it is decided if the user selected more than one icon. If this is not the case the control goes to step 220 such that the content of the cluster that is represented by the selected icon is visualized, such as by visualization of the sub-clusters contained in that cluster or the documents contained in the cluster.

If it is decided in step 218 that more than one icon has been selected, the control goes to step 222 where a search is performed for documents that are common to the selected clusters. This functionality can be executed by the visualization module (cf. visualization module 134 of fig. 1) by identifying entries into the database 136 that have path identifiers leading to the selected clusters.

In step 224 the documents that have been identified in step 222 are visualized, such as by displaying the list of the documents for a user's selection and access to these documents.

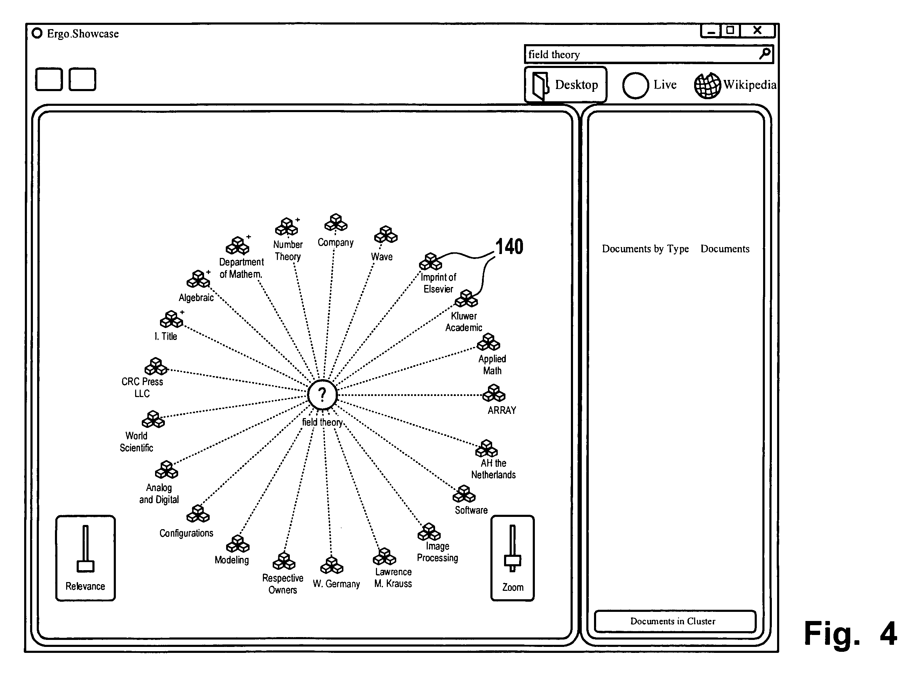

The following is a sequence of screen shots showing various implementations of the user interface 118. In the embodiment of fig. 4 the icons 140 are arranged in a circle. By selecting one of the icons, such as the icon 'number theory' the icon 'number theory' is moved in the middle and its sub-clusters are shown which are also represented by icons 140. When an icon 140 has a + sign, such as the number theory icon, this indicates that the cluster being represented by this icon 140 has sub-clusters. If the + sign is not shown this indicates that the respective cluster is a leave-node in the cluster tree, i.e. it contains one or more documents. For access to the documents in a cluster the user can select virtual button 142.

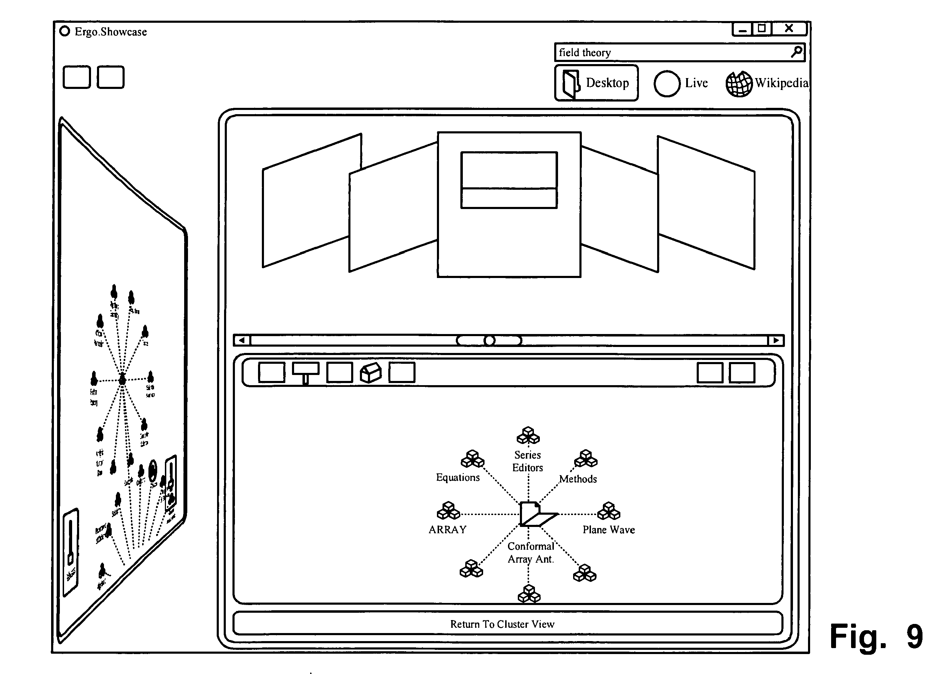

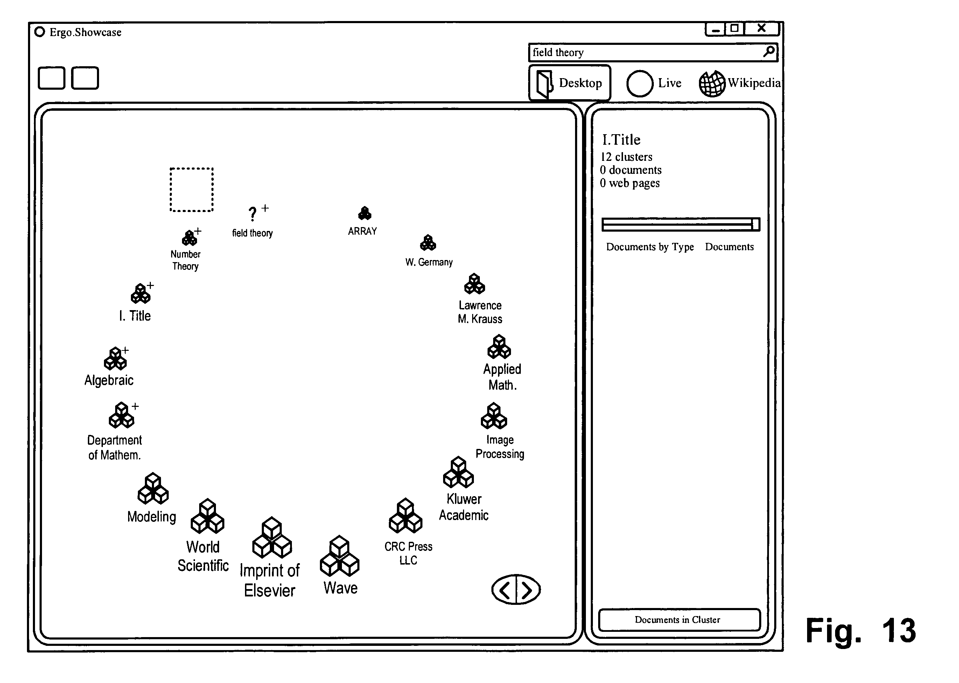

When the user selects two icons, such as by concurrently touching the icon 'world scientific' and 'wave' (fig. 13) in a multipoint-touch screen implementation, the documents common to both clusters are identified, if any. Fig. 9 shows an exemplary output that is generated in response to the selection of two or more clusters by the user showing the document 'conformal antenna array' and the clusters to which it belongs.

### List of reference numerals

| | |
|---|---|
| 100 | Client computer |
| 102 | Network interface |
| 104 | Computer network |
| 106 | Search engine |
| 108 | Network interface |
| 110 | Search index |
| 112 | Search processor |
| 114 | Request |
| 116 | Response |
| 118 | User interface |
| 120 | Data entry field |
| 122 | Output window |
| 124 | Display device |
| 126 | Filter |
| 128 | National language processing (NLP) module |
| 130 | Excerpt extraction |
| 132 | Clustering module |
| 134 | Visualization module |
| 136 | Database |
| 138 | Local storage |
| 140 | Icon |
| 142 | Virtual button |

## Claims

1. A data processing method comprising:
- submitting a query to a search engine,
- receiving a set of document identifiers in response to the query from the search engine,
- clustering the documents contained in the set of documents being identified by the set of document identifiers to provide a plurality of clusters,
- visualizing the clusters on a user interface by displaying a separate icon for each one of the plurality of clusters, each icon being representative of one of the clusters and each icon being selectable by a user in order to access the content of a user selected one of the clusters.

2. The data processing method of claim 1, wherein the clustering of the documents is performed using representative excerpts from the documents and/or meta-data of the documents.

3. The data processing method of claim 2, further comprising filtering the excerpts for performing the clustering on the filtered excerpts, the filtering comprising text segmentation for identification of word boundaries, word sense disambiguation and/or correction of typing or OCR errors.

4. The data processing method of claim 3, the filtering being performed using natural language processing.

5. The data processing method of claim 1, further comprising using a database for storing the set of document identifiers and for storing the results of the clustering.

6. The data processing method of any one of the preceding claims, the clusters being visualized by displaying the icons in a circular or carousel-like arrangement.

7. The data processing method of claim 6, the icons being rotatable by performing a first user input action.

8. The data processing method of any one of the preceding claims, the icons being arranged on a virtual sphere, the virtual sphere being rotatable by a second user input action.

9. The data processing method of any one of the preceding claims, further comprising:
- selecting at least two of the clusters by a user's selection of at least two of the icons that are representative of the selected clusters by performing a third user input action,
- identifying a sub-set of the documents being common to the selected clusters,
- displaying a list of the sub-set of the documents for a user's selection of at least one of the documents of the sub-set.

10. The data processing method of claim 9, wherein the third user input action is performed by placing a first user's finger on a first one of the icons and placing a second user's finger on a second one of the icons.

11. A computer program product comprising computer executable instructions for performing the data processing method in accordance with any one of the preceding claims.

12. A data processing system comprising:
- means for submitting a query to a search engine,
- means for receiving a set of document identifiers in response to the query from the search engine,
- means for clustering the documents of the set of documents to provide a plurality of clusters,
- means for visualizing the clusters on a user interface by displaying a separate icon for each one of the plurality of clusters, each icon being representative of one of the clusters and each icon being selectable by a user in order to access the content of a user selected one of the clusters.

13. The data processing system of claim 12, further comprising a database for storing representative excerpts of the documents contained in the set of documents and for storing the results of the clustering.

14. The data processing system of claim 12 or 13, further comprising filtering means for filtering the excerpts in order to perform the clustering on the filtered excerpts, the filtering comprising text segmentation for identification of word boundaries, word sense disambiguation and/or correction of typing or OCR errors.

15. The data processing system of any one of claims 12-15, the means for visualizing the clusters being adapted to display the icons in a circular or carousel-like arrangement or on a virtual sphere.

16. The data processing system of any one of the preceding claims 12 to 16, further comprising position sensing means for a user's selection of one or more of the icons.

17. The data processing system of claim 17, further comprising processing means for receiving a user's selection of at least two of the icons from the position sensing means and for identifying a sub-set of the documents of the set of documents being common to the clusters that are represented by the selected icons, and further comprising means for displaying representations of the sub-set of the documents for a user's selection of at least one of the documents from the sub-set of documents.
